# EUROPEAN PATENT APPLICATION

(11) **EP 4 467 272 A1**
(43) Date of publication of application: **27.11.2024**
(21) Application number: 23784164.8
(22) Date of filing: 22.03.2023
(51) Int. Cl.: B23D 45/16, B23Q 11/08

(54) **CUTTING DEVICE AND CONTROL METHOD**

(30) Priority: 06.04.2022 CN 202210355621; 14.03.2023 CN 202310256933
(71) Applicant: Nanjing Chervon Industry Co., Ltd., Nanjing, Jiangsu 211106 (CN)
(72) Inventor: SUN, Fangyong, Nanjing, Jiangsu 211106 (CN); ZHANG, Yinghao, Nanjing, Jiangsu 211106 (CN); GAN, Xingnian, Nanjing, Jiangsu 211106 (CN)
(74) Representative: Sun, Yiming
(86) International application number: PCT/CN2023/082989
(87) International publication number: WO 2023/193600

(57) **Abstract**

A cutting device (1000) includes a cutting system (1). The cutting system includes a motor (211) configured to provide power for the cutting system; a cutting assembly (10) including a cutting member (120) and a shield (110) at least partially surrounding the cutting member, where the cutting member is driven by the motor to rotate; and a first handle (30) provided with a switch assembly (310) configured to control the motor to switch a state, where in the case where the switch assembly is in a first state, the cutting system is powered off and the shield is positioned at a first position; and in the case where the switch assembly is in a second state, the cutting system is started and the shield is at a second position. Further included is a control method for the cutting device, where the cutting device further includes a sensing element and a controller; in the case where the controller detects that the switch assembly is switched from the first state to the second state, the controller determines a position of the shield (110) according to position information; in the case where the shield is at the second position, the controller starts the cutting system; and in the case where the shield is at the first position and the switch assembly (310) is switched to the second state, the controller controls the cutting system not to start. The linkage of the shield and the switch in the cutting device improves the safety of startup of the cutting system and can effectively prevent an operator from being injured.

## Description

This application claims priority to Chinese Patent Application No. 202210355621.6 filed with the China National Intellectual Property Administration (CNIPA) on Apr. 6, 2022 and Chinese Patent Application No. 202310256933.6 filed with the CNIPA on Mar. 14, 2023, the disclosures of which are incorporated herein by reference in their entireties.

### TECHNICAL FIELD

The present application relates to a power tool and a control method, for example, a cutting device and a control method.

### BACKGROUND

A power tool such as a cutting device has a saw blade rotating at a high speed. Therefore, a relatively high requirement is imposed on the safety of the power tool. In a starting state, the cutting device requires a shield to surround the saw blade to protect the safety of a user.

### SUMMARY

The present application provides a cutting device and a control method with high safety and high stability.

The present application provides a cutting device including a cutting system configured to complete workpiece cutting. The cutting system includes a motor configured to provide power for the cutting system; a cutting assembly including a cutting member and a shield at least partially surrounding the cutting member, where the cutting member is driven by the motor to rotate; and a first handle provided with a switch assembly configured to control the motor to switch a state, where in the case where the switch assembly is in a first state, the cutting system is powered off and the shield is positioned at a first position; and in the case where the switch assembly is in a second state, the cutting system is started and the shield is at a second position.

In some examples, the first handle includes a locking member, and the locking member is disposed between the switch assembly and the shield and linked to the switch assembly; in the case where the switch assembly is in the first state, the locking member positions the shield at the first position; and in the case where the switch assembly is in the second state, the locking member releases the shield.

In some examples, the locking member is formed with a locking portion, the shield is formed with a positioning groove for mating with the locking portion, and in the case where the locking portion mates with the positioning groove, the shield is at the first position.

In some examples, the locking member is rotatably connected to the first handle through a first spindle, and a locking portion rotates around the first spindle.

In some examples, the first handle includes a biasing member, the biasing member is connected to the locking member, and in the case where the switch assembly is in the second state, the biasing member provides a force for releasing the locking member.

In some examples, the first handle is formed with a grip portion, and the switch assembly is disposed on the grip portion.

In some examples, the first handle includes a housing, the grip portion is formed on the housing and has an opening, and the switch assembly is disposed in the opening.

In some examples, in the case where the shield is at the first position, the first handle is located on one side of the shield.

In some examples, the switch assembly includes a first pressed portion and a second pressed portion, the first pressed portion is connected to the second pressed portion through a connecting portion, and a gap exists between the first pressed portion and the second pressed portion.

In some examples, the first handle is formed with a grip portion, the grip portion has an opening, and the first pressed portion and the second pressed portion are separately disposed on two sides of the opening.

In some examples, in the case where the switch assembly moves along a first direction, the switch assembly is switched from the first state to the second state, and in the case where the switch assembly moves along a second direction opposite to the first direction, the switch assembly is switched from the second state to the first state.

In some examples, the switch assembly is connected to the first handle through a second spindle, and the switch assembly rotates around the second spindle.

In some examples, the first handle includes a limiting member, and in the case where the switch assembly is in the first state, the limiting member exerts a force on the switch assembly to keep the switch assembly still relative to the shield.

In some examples, the switch assembly includes a first pressed portion and a second pressed portion, and the limiting member abuts against one end of the first pressed portion.

In some examples, the limiting member is configured to deform under the action of an external force, and in the case where the switch assembly is switched from the first state to the second state, the switch assembly deforms the limiting member so that the force exerted by the limiting member on the switch assembly is weakened until the force is less than the external force exerted by the switch assembly on the limiting member.

In some examples, the cutting system further includes a sensing element and a controller, and the sensing element detects a position of the shield and transmits position information to the controller; in the case where the switch assembly is switched to the second state, the controller determines the position of the shield, and in the case where the shield is at the second position, the controller starts the cutting system.

In some examples, the cutting assembly further includes a fixed cover disposed above the cutting member and at least partially surrounding the cutting member; and the fixed cover is disposed between the shield and the cutting member.

In some examples, the shield overlaps the fixed cover, and an overlap between the shield at the first position and the fixed cover has a greater area than an overlap between the shield at the second position and the fixed cover.

In some examples, a drive assembly includes a housing, the fixed cover is connected to the housing, the motor and a transmission device are disposed in the housing, and the housing is connected to the first handle.

The present application provides a cutting device including a cutting system configured to complete workpiece cutting. The cutting system includes a motor configured to provide power for the cutting system; a cutting assembly including a cutting member and a shield at least partially surrounding the cutting member, where the cutting member is driven by the motor to rotate; and a switch assembly configured to control the motor to switch a state, where in the case where the switch assembly is in a first state, the cutting system is powered off and the shield is positioned at a first position; and in the case where the switch assembly is in a second state, the cutting system is started and the shield is at a second position.

In some examples, the cutting assembly further includes a fixed cover disposed above the cutting member and at least partially surrounding the cutting member; and the fixed cover is disposed between the shield and the cutting member.

In some examples, the shield overlaps the fixed cover, and an overlap between the shield at the first position and the fixed cover has a greater area than an overlap between the shield at the second position and the fixed cover.

The present application provides a control method for a cutting device. The cutting device includes a cutting system configured to complete workpiece cutting, a sensing element, and a controller, and the sensing element is configured to detect a position of a shield and transmit position information to the controller.

The cutting system includes a motor configured to provide power for the cutting system; a cutting assembly including a cutting member and the shield at least partially surrounding the cutting member, where the cutting member is driven by the motor to rotate; and a switch assembly configured to control the motor to switch a state, where the state includes a first state and a second state.

The control method includes the steps below.

In the case where the controller detects that the switch assembly is switched from the first state to the second state, the controller determines the position of the shield according to the position information.

In the case where the shield is at a second position, the controller controls the cutting system to start.

In the case where the shield is at a first position and the switch assembly is switched to the second state, the controller controls the cutting system not to start.

In some examples, the cutting system further includes an indication element, and the control method further includes the following: in the case where the controller receives a signal that the switch assembly reaches the second state and a signal that the shield is at the first position, the controller causes the indication element to emit an indication signal.

### BRIEF DESCRIPTION OF DRAWINGS

FIG. 1 is a perspective view of a cutting device according to an example of the present application.
FIG. 2 is a perspective view of a cutting system according to an example of the present application.
FIG. 3 is a top view of a cutting system according to an example of the present application.
FIG. 4 is a schematic view of the internal structure of a first handle according to an example of the present application.
FIG. 5 is a structural view of structure A in FIG 4.
FIG. 6 is a structural view of structure A in FIG. 4 when a switch assembly is in a second state.
FIG. 7 is a flowchart of a control method according to an example of the present application.

### DETAILED DESCRIPTION

Examples of the present application are described below in conjunction with the drawings.

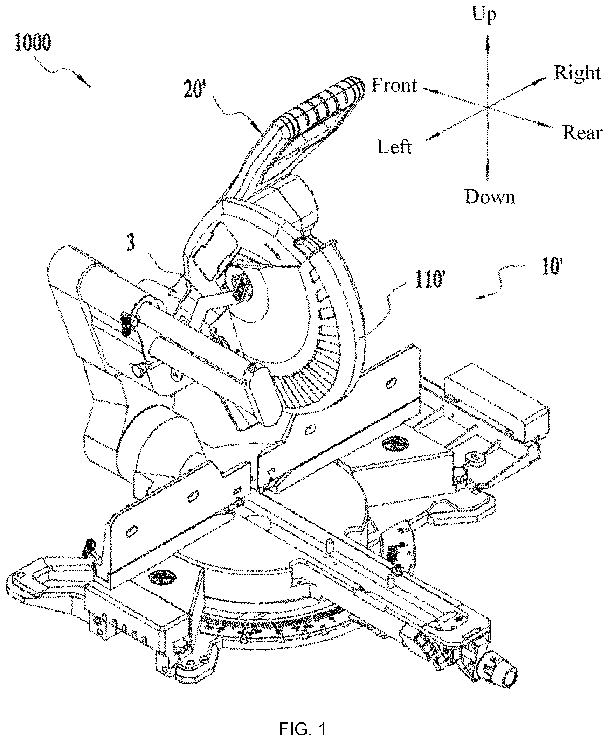

To describe technical solutions of the present application, up, down, front, rear, left, and right are defined, as shown by arrows in FIG. 1. A state of a cutting device in FIG. 1 is used as an example to illustrate the directions of up, down, left, and right in this example.

A cutting device 1000 includes a cutting system 1. The cutting system 1 refers to a series of assemblies for completing a cutting operation. The cutting system 1 mainly includes a cutting assembly 10 and a drive assembly 20. According to different functions of the cutting device 1000, the cutting system 1 is also different. The cutting device 1000 of the present application is a table cutting device, for example. With a miter saw as an example, the cutting system 1 shown in FIG. 1 further includes a workbench and a frame supporting the cutting system.

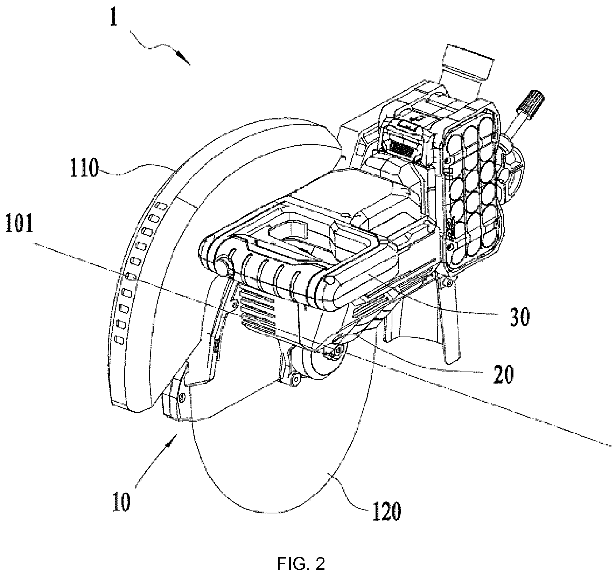

As shown in FIG. 1, the cutting device 1000 includes the cutting system 1, the cutting system 1 includes a cutting assembly 10' and a drive assembly 20', and the cutting assembly 10' includes a cutting member (not shown in FIG. 1) and a shield 110' at least partially surrounding the cutting member. The drive assembly 20' provides power for the cutting system. To lock the shield 110', a linkage rod 3 connecting the shield 110' and the frame is generally provided. A sliding hole is provided at an end of the linkage rod 3 facing the shield 110', and the shield 110' is connected to the sliding hole through a sliding column. When the shield 110' rotates, the sliding column moves in the sliding hole. The shield 110' may rotate between a first position and a second position. For example, for the first position, refer to FIG. 1 and for the second position, refer to FIG. 2. The shield 110' at the second position covers a larger area of the cutting member than the shield 110' at the first position.

When the shield 110' moves from the second position shown in FIG. 1 to the first position under the action of an external force, the sliding column moves from one end of the sliding hole to the other end of the sliding hole. In this case, the shield 110' is kept still at the first position under the action of a frictional force, gravity, and a force exerted by the linkage rod 3 on the sliding column. In this structure, if an external force is applied to the shield 110' at the first position, such as an operation of an operator by mistake, the balance of the shield 110' is affected and the shield 110' drops, affecting the normal operation. In this structure, another case occurs that when the linkage rod 3 is tightly connected to the sliding column, the shield 110' cannot easily drop to the second position. In this case, if a switch is mistouched, the cutting device 1000 is started and the high-speed rotation of the cutting member causes a danger to the operator.

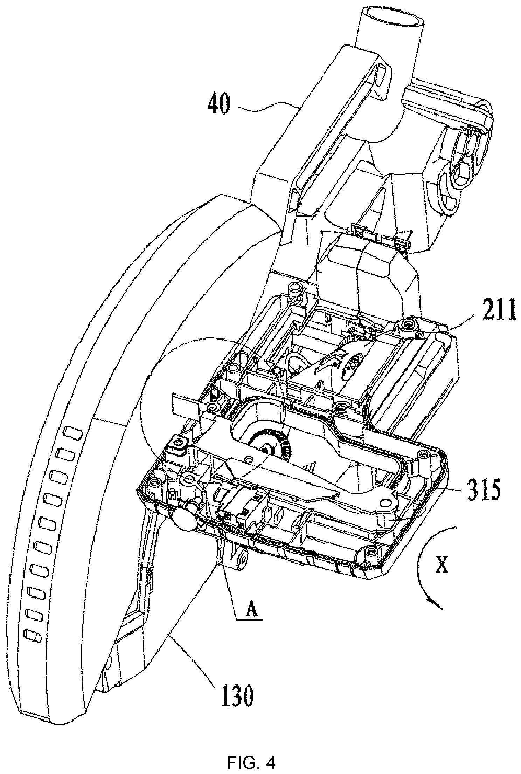

As shown in FIG. 2, the present application provides another cutting system 1 adapted to the cutting device 1000 in FIG. 1, the cutting system 1 includes a cutting assembly 10 and a drive assembly 20, the cutting assembly 10 includes a cutting member 120 and a shield 110 at least partially surrounding the cutting member 120, the drive assembly 20 includes a motor 211 (see FIG. 4) that provides power for the cutting system 1, and the cutting member 120 is driven by the motor 211 to rotate. The shield 110 moves between the first position and the second position, for example, the shield 110 may rotate around a first axis 101 between the first position and the second position. In a certain case, the shield 110 may remain still at the first position. When another component acts, the shield 110 is released and drops freely to rotate to the second position. The second position refers to a set of multiple positions at which the shield 110 may stay and different from the first position. If the shield 110 interferes with another component of the cutting device such as the workbench, the shield 110 stays at the second position, or the shield 110 stays at the second position under the action of gravity. The shield 110 at the second position covers the larger area of the cutting member 120 than the shield 110 at the first position.

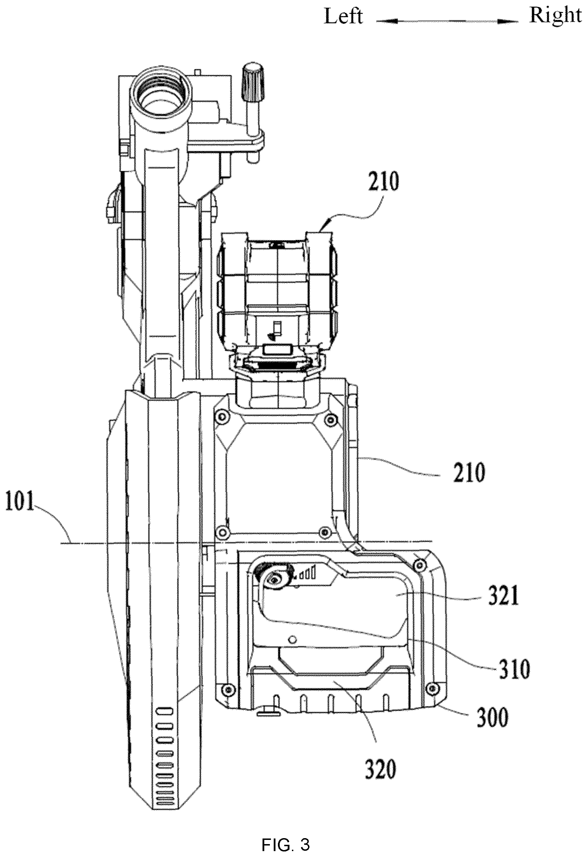

As shown in FIG. 3, the drive assembly 20 includes a housing 210, the motor 211 and a transmission device are disposed in the housing 210, and the motor 211 is connected to the cutting member 120 through the transmission device. The motor 211 provides power for the rotation of the cutting member 120. The housing 210 is disposed on one side of the shield 110 in a left and right direction.

The cutting system 1 further includes a first handle 30, and the first handle 30 is configured for a user to hold and operate the cutting device. In the miter saw of this example, the cutting system 1 may move relative to the workbench, and a relative position of the cutting system 1 is moved by operating the first handle 30. For ease of operation, the first handle 30 is generally disposed near the cutting assembly 10. In this example, the first handle 30 is connected to the housing 210 and extends toward the front side of the cutting system 1.

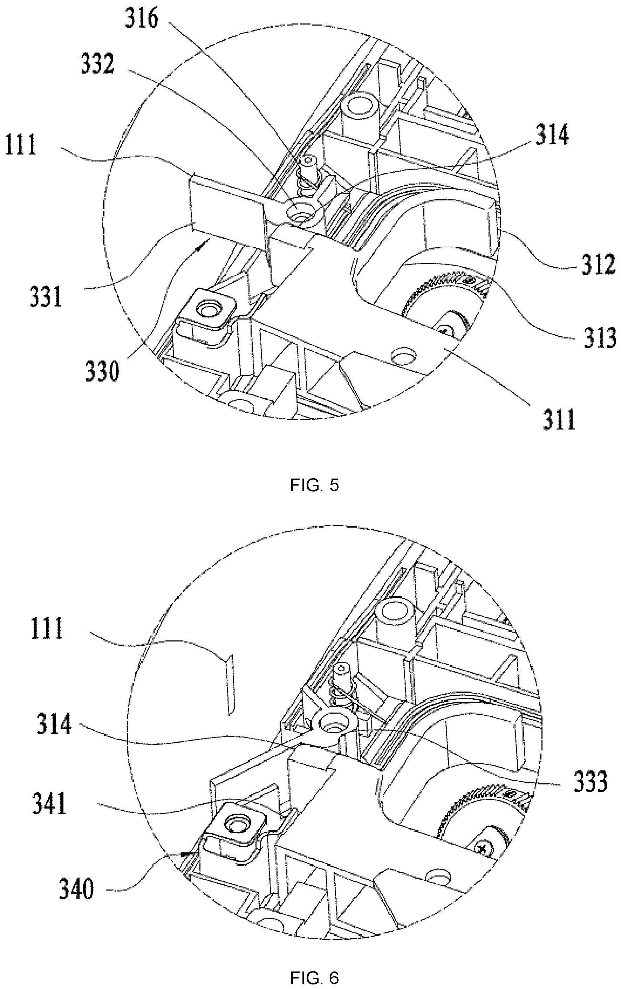

The first handle 30 is provided with a switch assembly 310 configured to control the motor 211 to switch a state, and the switch assembly 310 includes a first state and a second state. In some examples, the first state refers to an off state of the switch assembly 310 and the second state refers to an on state of the switch assembly 310. As shown in FIG. 4, when the switch assembly 310 is in the first state, the cutting system 1 is powered off and the shield 110 is at the first position. As shown in FIG. 6, when the switch assembly 310 is in the second state, the cutting system 1 is started and the shield 110 is at the second position. The switch assembly 310 includes an electronic element that can be conducted. The second state refers to an on state of the electronic element in the switch assembly 310 and the first state refers to an off state of the electronic element in the switch assembly 310.

As shown in FIG. 3, the first handle 30 is formed with a grip portion 320, the grip portion 320 is configured for the user to hold, and the switch assembly 310 is disposed on the grip portion 320. The first handle 30 includes a housing 300, and the grip portion 320 is formed on the housing 300 and has an opening 321. The switch assembly 310 is disposed in the opening 321 and disposed on a side of the opening 321.

As shown in FIG. 5, the switch assembly 310 includes a first pressed portion 311 and a second pressed portion 312, the first pressed portion 311 is connected to the second pressed portion 312 through a connecting portion 313, and a gap exists between the first pressed portion 311 and the second pressed portion 312 so that the user operates by hand. The first pressed portion 311 and the second pressed portion 312 are separately disposed on two sides of the opening 321. When the switch assembly 310 moves along a first direction X (see FIG. 4), the switch assembly 310 is switched from the first state to the second state. When the switch assembly 310 moves along a second direction opposite to the first direction X, the switch assembly 310 is switched from the second state to the first state. The switch assembly 310 is connected to the housing 300 of the first handle through a second spindle 315 (see FIG. 4), and the switch assembly 310 rotates around the second spindle 315.

The first handle 30 includes a locking member 330 (see FIG. 5), and the locking member 330 is disposed between the switch assembly 310 and the shield 110 and linked to the switch assembly 310. When the switch assembly 310 is in the first state, the locking member 330 positions the shield 110 at the first position. When the switch assembly 310 is in the second state, the locking member 330 releases the shield 110, and the shield 110 then reaches the second position. The locking member 330 is formed with a locking portion 331, the shield 110 is formed with a positioning groove 111 for mating with the locking portion 331, and when the locking portion 330 mates with the positioning groove 111, the shield 110 is at the first position. When the shield 110 at the first position, the first handle 30 is located on one side of the shield 110. The locking member 330 is rotatably connected to the housing 300 of the first handle 30 through a first spindle 332, and the locking portion 330 rotates around the first spindle 332.

The locking member 330 is linked to the switch assembly 310 and rotates as the switch assembly 310 rotates. A protruding limiting portion 314 is formed at an end of the switch assembly 310 facing the shield 110. When the switch assembly 310 is in the first state, the limiting portion 314 abuts against the locking member 330. As shown in FIG. 5, the locking member 330 is at a locking position in this case. When the switch assembly 310 is in the second state, the limiting portion 314 releases the locking member 330. As shown in FIG. 6, the locking member 330 is at a release position in this case. The first handle 30 includes a biasing member 316, and the biasing member 316 is connected to the locking member 330 and provides a force for the locking member 330. When the switch assembly 310 is in the first state, the limiting portion 314 abuts against the locking member 330 so that the locking member 330 mates with the positioning groove 111 to lock the shield 110, and the locking member 330 compresses the biasing member 316. When the switch assembly 310 is in the second state, that is, when the switch assembly 310 is disengaged from the locking member 220, the biasing member 316 is restored from a compressed state and provides the force for releasing the locking member 330. The locking member 330 may be further provided with a biasing portion connected to the biasing member 316.

The locking member 330 is provided with a limiting groove 333 at a position abutting against the limiting portion 314, and the limiting groove 333 matches the limiting portion 314 in shape. As shown in FIG. 5, when the switch assembly 310 is in the first state, the limiting portion 314 abuts against the limiting groove 333. As shown in FIG. 6, when the switch assembly 310 is in the second state, the limiting portion 314 is disengaged from the limiting groove 333 to release the locking member 330. As shown in FIG. 6, the locking member 330 is at the release position in this case. The locking member 330 at the release position is retracted to an accommodation space of the housing 300.

In other examples, the switch assembly 310 may not be disposed on the first handle 30. Alternatively, the handle is not disposed on another type of cutting device, and the switch assembly 310 is disposed at least adjacent to the shield 110.

The first handle 30 is further provided with a limiting member 340 (see FIG. 6). When the switch assembly 310 is in the first state, the limiting member 340 exerts a force on the switch assembly 310 to keep the switch assembly 310 still relative to the shield 110. The limiting member 340 can deform under the action of an external force. When the switch assembly 310 is switched from the first state to the second state, the switch assembly 310 deforms the limiting member 340 so that the force exerted by the limiting member 340 on the switch assembly 310 is weakened until the force is less than the external force exerted by the switch assembly 310 on the limiting member 340. The limiting member 340 includes an elastic member 341, and the elastic member 341 protrudes outward and abuts against one end of the switch assembly 310 when the switch assembly 310 is in the first state, for example, abuts against an end of the first pressed portion 311 facing the shield 110. When the switch assembly 310 is in the first state, the elastic member 341 is compressed to generate the force on the switch assembly 310 so that the switch assembly 310 is more stably kept in the first state. When the switch assembly 310 moves to the second state under the action of an external force, the elastic member 341 is reset, and the force decreases or disappears.

The cutting assembly 10 further includes a fixed cover 130 (see FIG. 4), and the fixed cover 130 is disposed above the cutting member 120 and at least partially surrounding the cutting member 120. The fixed cover 130 is disposed between the shield 110 and the cutting member 120, and the fixed cover 130 remains relatively still. That is, the shield 110 overlaps the fixed cover 130, and an overlap between the shield 110 at the first position and the fixed cover 130 has a greater area than an overlap between the shield 110 at the second position and the fixed cover 130. Part of the cutting member 120 is exposed out of the fixed cover 130, and part of the cutting member 120 is disposed in the fixed cover 130. For the part of the cutting member 120 exposed out of the fixed cover 130, the shield 110 at the first position does not cover the exposed part or covers the exposed part as few as possible, and the shield 110 at the second position covers the exposed part of the cutting member 120 to ensure the safety of use of the cutting system 1. The fixed cover 130 is connected to the housing 210, and the housing 210 is connected to the housing 300.

The cutting system 1 further includes a second handle 40 (see FIG. 4). The second handle 40 is disposed behind the shield 110 and may be disposed at a connection between the fixed cover 130 and the frame. The second handle 40 is configured to assist in adjusting the position of the cutting system 1. When the cutting device 1000 is not the table cutting device, the second handle 40 may serve as a main handle.

In another example of the present application, the cutting system 1 may be controlled to implement the linkage of the shield 110 and the switch assembly 310. The cutting system 1 further includes a sensing element and a controller (not shown in the drawings). The sensing element is generally disposed on an edge of the shield 110 or near the shield 110. The controller is generally integrated into a main circuit board of the cutting device 1000. The sensing element detects a position of the shield 110 and transmits information to the controller. When the switch assembly 310 is switched to the second state, the controller determines the position of the shield 110. When the shield 110 is at the second position, the controller starts the cutting system 1. The cutting system 1 further includes an indication element. When the controller receives a signal that the switch assembly 310 reaches the second state and a signal that the shield 110 is at the first position, the controller causes the indication element to emit an indication signal. The indication signal includes a sound or light and prompts the user that the state of the shield 110 does not meet a startup requirement of the cutting system 1.

The present application has the following benefit: the linkage of the shield and the switch in the present application improves the safety of startup of the cutting system and can effectively prevent the operator from being injured.

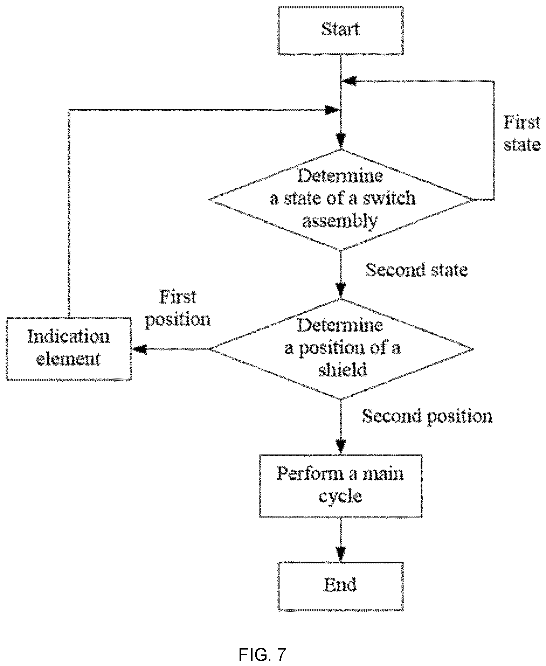

The control logic of the controller for the cutting system 1 is shown in FIG. 7. A control process is described below. The controller detects the state of the switch assembly 310. When the switch assembly 310 is in the first state, the controller performs no operation until the switch assembly 310 is switched to the second state. When the switch assembly 310 is switched to the second state, the controller inquires the signal transmitted from the sensing element, where the sensing element is configured to determine the position of the shield 110. When the signal fed back by the sensing element shows that the shield 110 is at the first position, the controller controls the indication element to emit a reminder, where a form of the reminder includes a sound alarm or a flicker of an indicator light. When the signal fed back by the sensing element shows that the shield 110 is at the second position, the controller controls the cutting system 1 to perform a main cycle, that is, the motor 211 is started for cutting.

The sensing element includes, but is not limited to, an optoelectronic switch, a microswitch, a magnetic switch, and an encoder. When the sensing element is one of the optoelectronic switch, the microswitch, the magnetic switch, and similar elements, the sensing element is disposed on the edge of the shield 110. When the sensing element is the encoder, the sensing element is disposed at the position of a spindle of the shield 110 and outputs a position signal by detecting an angle of rotation of the spindle.

## Claims

1. A cutting device, comprising a cutting system configured to complete workpiece cutting, wherein the cutting system comprises:
a motor configured to provide power for the cutting system;
a cutting assembly comprising a cutting member and a shield at least partially surrounding the cutting member, wherein the cutting member is driven by the motor to rotate; and
a first handle provided with a switch assembly configured to control the motor to switch a state, wherein in a case where the switch assembly is in a first state, the cutting system is powered off and the shield is positioned at a first position; and in a case where the switch assembly is in a second state, the cutting system is started and the shield is at a second position.

2. The cutting device of claim 1, wherein the first handle comprises a locking member, and the locking member is disposed between the switch assembly and the shield and linked to the switch assembly; in the case where the switch assembly is in the first state, the locking member positions the shield at the first position; and in the case where the switch assembly is in the second state, the locking member releases the shield.

3. The cutting device of claim 2, wherein the locking member is formed with a locking portion, the shield is formed with a positioning groove for mating with the locking portion, and in a case where the locking portion mates with the positioning groove, the shield is at the first position.

4. The cutting device of claim 2, wherein the locking member is rotatably connected to the first handle through a first spindle, and a locking portion rotates around the first spindle.

5. The cutting device of claim 2, wherein the first handle comprises a biasing member, the biasing member is connected to the locking member, and in the case where the switch assembly is in the second state, the biasing member provides a force for releasing the locking member.

6. The cutting device of claim 1, wherein the first handle is formed with a grip portion (320), and the switch assembly is disposed on the grip portion.

7. The cutting device of claim 6, wherein the first handle comprises a housing, the grip portion is formed on the housing and has an opening, and the switch assembly is disposed in the opening.

8. The cutting device of claim 1, wherein in a case where the shield is at the first position, the first handle is located on one side of the shield.

9. The cutting device of claim 1, wherein the switch assembly comprises a first pressed portion and a second pressed portion, the first pressed portion is connected to the second pressed portion through a connecting portion, and a gap exists between the first pressed portion and the second pressed portion.

10. The cutting device of claim 9, wherein the first handle is formed with a grip portion , the grip portion has an opening, and the first pressed portion and the second pressed portion are separately disposed on two sides of the opening.

11. The cutting device of claim 1, wherein the switch assembly is connected to the first handle through a second spindle, and the switch assembly rotates around the second spindle.

12. The cutting device of claim 1, wherein the first handle comprises a limiting member, and in the case where the switch assembly is in the first state, the limiting member exerts a force on the switch assembly to keep the switch assembly still relative to the shield.

13. The cutting device of claim 12, wherein the switch assembly comprises a first pressed portion and a second pressed portion, and the limiting member abuts against one end of the first pressed portion.

14. The cutting device of claim 12, wherein the limiting member is configured to deform under an action of an external force, and in a case where the switch assembly is switched from the first state to the second state, the switch assembly deforms the limiting member so that the force exerted by the limiting member on the switch assembly is weakened until the force is less than the external force exerted by the switch assembly on the limiting member.

15. The cutting device of claim 1, wherein the cutting assembly further comprises a fixed cover disposed above the cutting member and at least partially surrounding the cutting member; and the fixed cover is disposed between the shield and the cutting member.

16. A cutting device, comprising a cutting system configured to complete workpiece cutting, wherein the cutting system comprises:
a motor configured to provide power for the cutting system;
a cutting assembly comprising a cutting member and a shield at least partially surrounding the cutting member, wherein the cutting member is driven by the motor to rotate; and
a switch assembly configured to control the motor to switch a state, wherein in a case where the switch assembly is in a first state, the cutting system is powered off and the shield is positioned at a first position; and in a case where the switch assembly is in a second state, the cutting system is started and the shield is at a second position.

17. The cutting device of claim 16, wherein the cutting assembly further comprises a fixed cover disposed above the cutting member and at least partially surrounding the cutting member; and the fixed cover is disposed between the shield and the cutting member.

18. The cutting device of claim 17, wherein the shield overlaps the fixed cover, and an overlap between the shield at the first position and the fixed cover has a greater area than an overlap between the shield at the second position and the fixed cover.

19. A control method for a cutting device, wherein the cutting device comprises a cutting system configured to complete workpiece cutting, a sensing element, and a controller, and the sensing element is configured to detect a position of a shield and transmit position information to the controller;
the cutting system comprises: a motor configured to provide power for the cutting system; a cutting assembly comprising a cutting member and the shield at least partially surrounding the cutting member, wherein the cutting member is driven by the motor to rotate; and a switch assembly configured to control the motor to switch a state, wherein the state comprises a first state and a second state; and
the control method comprises:
in a case where the controller detects that the switch assembly is switched from the first state to the second state, determining, by the controller, the position of the shield according to the position information;
in a case where the shield is at a second position, starting, by the controller, the cutting system; and
in a case where the shield is at a first position and the switch assembly is switched to the second state, controlling, by the controller, the cutting system not to start.

20. The control method for the cutting device of claim 19, wherein the cutting device further comprises an indication element, and the control method further comprises:
in a case where the controller receives a signal that the switch assembly reaches the second state and a signal that the shield is at the first position, controlling, by the controller, the indication element to emit an indication signal.
